# DEMANDE DE BREVET EUROPEEN

(11) **EP 0 892 296 A1**
(43) Date de publication de la demande: **20.01.1999**
(21) Numéro de dépôt: 98420121.0
(22) Date de dépôt: 16.07.1998
(51) Int. Cl.: G02C 5/22

(54) **Charnière élastique pour branche de lunettes plate**

(30) Priorité: 17.07.1997 FR 9709310
(71) Demandeur: SIPAL S.A., F-39400 Morez (FR)
(72) Inventeur: Kerjean, Alain, 39200 Saint-Claude (FR); Malfroy, Roger, 39400 La Mouille (FR)
(74) Mandataire: Moinas, Michel

(57) **Abrégé**

La charnière élastique de lunettes comprenant du premier côté (6), par exemple en l'extrémité de la branche, un charnon mâle (10) et du second côté (4), par exemple sur le tenon de façade, un charnon femelle (20) relié au charnon mâle par un axe de liaison (12). Lorsque la périphérie du charnon mâle (10') du premier côté (6) est en forme de came (13,15), l'orifice (11) de passage de l'axe de liaison (12) du charnon mâle (10') se présente alors sous la forme d'une lumière longitudinale (16) orientée vers la périphérie en forme de came (13,15). Un ressort (18) logé dans la lumière (16) agit entre le fond de cette lumière et l'axe de liaison (12) pour pousser la périphérie en forme de came du charnon mâle contre le fond du charnon femelle (20'). Lorsque la périphérie des oeilletons du charnon femelle (20) du second côté (4) est en forme de came, l'extrémité plate (14) du premier côté (6) présente alors, proche du charnon mâle (10), une lumière (16) longitudinale transversale. Une pièce externe (30) comprenant un ressaut (34) intérieur coulisse contre les grandes faces de l'extrémité plate (14) du premier côté (6) en recouvrant de part et d'autre la lumière (16). Un ressort (18) logé dans la lumière agit entre le fond de la lumière et le ressaut (34) pour pousser la pièce coulissante (30) contre la périphérie en forme de came du charnon femelle (20).

## Description

La présente invention est relative à une charnière élastique de lunettes reliant une branche à une façade de monture de verres. De telles charnières élastiques donnent un effet de claquement lors du passage des branches de leur position dite "ouverte" de port de lunettes à leur position dite "fermée" de rangement, et permettent d'écarter les branches élastiquement vers l'extérieur au-delà de leur position "ouverte". Ces charnières sont très appréciées du public, notamment du fait qu'elles permettent de maintenir une bonne géométrie de la monture même si celle-ci est fréquemment utilisée, et du fait que les branches se plaquent contre les tempes avec une pression raisonnable.

De manière générale, une charnière élastique est composée d'une part d'un charnon de face fixé solidement dans le tenon latéral de la façade, et d'autre part d'un charnon de branche relié par ou avec un mécanisme de rappel élastique à l'extrémité de la branche, un axe assurant la liaison entre les charnons.

Un premier type de mécanisme de rappel connu, dit "à coulisse" comprend une coulisse mobile en translation à l'intérieur d'un logement ménagé ou rapporté à l'extrémité de la branche, l'extrémité émergente de la coulisse portant un charnon mâle ou femelle. L'autre charnon de façade en forme de came est en appui contre l'embouchure du logement. Dans la coulisse est réalisé un espace longitudinal de manière à y loger un ressort dont l'extrémité arrière prend appui contre la paroi arrière de la coulisse, et dont l'extrémité avant vient s'appuyer contre une butée rendue solidaire du logement, tel qu'un axe, une goupille ou une vis traversant. Lors d'une rotation de la branche, le charnon de façade repousse le logement, ce qui provoque une sortie élastique de la coulisse. Ce type de charnière élastique est, par exemple, décrit dans les documents EP 0 091 573, FR 2 258 642, FR 1 511 263, EP 0 426 947 et FR 2 702 573.

Selon un second type de mécanisme de rappel connu dit "à tige", le charnon de branche, usuellement mâle, est ménagé à l'extrémité émergente d'une tige centrale mobile en translation à l'intérieur d'un logement ménagé ou rapporté à l'extrémité de la branche. Le charnon femelle de façade en forme de came est en appui contre l'embouchure du logement. Un ressort enfilé autour de cette tige centrale prend appui d'un côté contre une surépaisseur réalisée en bout de tige, et de l'autre côté contre une goupille traversant le logement ou contre une butée s'enclenchant dans la face interne du logement pour faire office de restriction. Lors d'une rotation de la branche, le charnon de façade repousse le logement, ce qui provoque une sortie élastique de la tige. Ce type de charnière élastique est, par exemple, décrit dans les documents EP 0 340 161, FR 2 609 816 ou FR 2 664 990.

L'extrémité de la branche dans laquelle est ménagé, ou contre laquelle est rapporté, le logement du mécanisme présente donc nécessairement une section transversale minimum conséquente, à la fois dans la largeur telle que vue dans le sens perpendiculaire à la tempe du porteur et dans la hauteur telle que vue dans le sens parallèle à la tempe du porteur et perpendiculairement au sens longitudinal de la branche, du fait que cette section est la somme de celles du ressort, de la coulisse et des parois périphériques de logement dans le premier cas, ou la somme de la tige, du ressort et des parois périphériques de logement dans le second cas. De telles montures à charnières et extrémités de branches volumineuses sont alors fréquemment considérées comme trop inesthétiques par de nombreux acheteurs potentiels pourtant désireux de bénéficier de l'effet élastique.

Un troisième type de charnière élastique dit "à fourreau", décrit dans le document FR 2 517 080, comprend un charnon mâle ménagé directement à l'extrémité d'une branche sous la forme d'une tige métallique cylindrique, et relié par une vis à un charnon femelle solidaire de la façade. Un fourreau monté coulissant sur la tige cylindrique proche du charnon mâle est normalement poussé en direction du charnon femelle par un ressort également concentrique à la tige cylindrique et prenant appui à l'arrière contre une butée solidaire de cette branche, telle qu'une bague sertie ou une enveloppe de branche collée. Dans le mode de réalisation décrit, le fourreau présente un prolongement extérieur venant prendre appui contre une butée également extérieure du tenon de façade afin de réaliser un effet élastique au-delà de la position d'ouverture. Dans un mode ultérieur de réalisation, une face frontale plane de ce fourreau est poussée contre un charnon de façade femelle en forme de came qui repousse donc le fourreau en comprimant élastiquement le ressort lors d'une rotation de la branche entre la position ouverte et fermée. La section transversale de l'extrémité correspondante de la branche est donc réduite à celle de la tige et du fourreau coaxial. Toutefois, ce mécanisme est relativement long tel que vu dans le sens longitudinal de la branche dans la mesure où le fourreau, le ressort et la bague d'arrêt sont l'un derrière l'autre. Surtout, ce mécanisme n'est applicable que pour des branches dont l'extrémité est réduite à une simple tige métallique cylindrique.

Si des branches de lunettes plates plus hautes que larges sont déjà souvent utilisées, on a récemment envisagé d'agencer des branches de lunettes plates à l'horizontale dans de nouvelles formes esthétiques. Il n'est alors plus possible de cacher un mécanisme du premier ou second type contre la face interne de la branche orientée vers la tempe du porteur, face dont la hauteur (ou épaisseur) est alors réduite au minimum. Il existe pourtant un besoin d'un mécanisme élastique de charnière également dans cette configuration qui soit apte à assurer une élasticité de déplacement aussi bien entre la position ouverte et fermée de la branche, que dans un déplacement au-delà de la position ouverte, pour autant qu'un tel mécanisme puisse s'intégrer de manière discrète dans une telle extrémité de branche plate.

Le but de la présente invention est une charnière de lunettes dont le mécanisme élastique s'intègre particulièrement bien dans une extrémité de branche plate, notamment horizontale. Ce mécanisme doit pouvoir assurer de manière efficace une élasticité au-delà de la position d'ouverture et/ou une seconde élasticité entre les positions ouverte et fermée de branche, et ceci tout en respectant l'aspect "fluide plat" pour apparaître de la manière la plus discrète possible, en devenant, le cas échéant un élément de décoration.

De préférence, une telle charnière doit être réalisable en petites dimensions, notamment en métal, et doit comprendre autant que possible un nombre réduit de pièces simples à réaliser, solides et peu onéreuses.

De préférence également, les parties constitutives de cette charnière doivent être agencées de telle sorte qu'elles soient raisonnablement faciles à monter, voire à démonter en cas de réparation.

Ces buts sont atteints grâce à une charnière élastique de lunettes comprenant du premier côté, par exemple en l'extrémité de la branche, un charnon mâle et du second côté, par exemple sur le tenon de façade, un charnon femelle relié au charnon mâle par un axe de liaison, caractérisée en ce que,
lorsque la périphérie du charnon mâle du premier côté est en forme de came,
l'orifice de passage de l'axe de liaison du charnon mâle se présente sous la forme d'une lumière longitudinale orientée vers la périphérie en forme de came, et en ce qu'un ressort logé dans la lumière agit entre le fond de cette lumière et l'axe de liaison pour pousser la périphérie en forme de came du charnon mâle contre le fond du charnon femelle
ou en ce que, lorsque la périphérie des oeilletons du charnon femelle du second côté est en forme de came,
l'extrémité plate du premier côté présente, proche du charnon mâle, une lumière longitudinale traversante,
en ce qu'une pièce externe comprenant un ressaut intérieur coulisse contre les grandes faces de l'extrémité plate du premier côté en recouvrant de part et d'autre la lumière,
et en ce qu'un ressort logé dans la lumière agit entre le fond de la lumière et le ressaut pour pousser la pièce coulissante contre la périphérie en forme de came du charnon femelle.

En d'autres termes, on met à profit la largeur du côté plat pour y ménager dans sa hauteur, donc dans son épaisseur, une lumière longitudinale traversante dans laquelle on loge un ressort. Ce logement de ressort est alors fermé soit par le charnon femelle, soit par la pièce coulissante externe faisant alors simultanément office de paroi protectrice de mécanisme. On réussit ainsi à supprimer au moins les deux parois opposées du logement de l'art antérieur, et ceci justement dans le sens de la plus petite dimension de la branche dont l'aspect général reste donc bien "fluide et plat", notamment lorsque cette branche est orientée à l'horizontale lorsqu'ainsi désiré par les concepteurs de l'apparence.

De plus, ce mécanisme peut être remarquablement court. Il suffit d'une part de rapprocher l'extrémité avant de la lumière et les faces frontales de la pièce externe coulissante très proche du charnon femelle, et d'autre part de choisir un ressort efficace mais également court. Par rapport aux deux premiers types de mécanismes selon l'art antérieur, on gagne au minimum l'épaisseur de la paroi de fond de logement et la longueur du bloc arrière de guidage de charnon retenant tige ou coulisse. Par rapport au troisième type de mécanisme, on supprime la bague arrière d'arrêt de ressort et on superpose le ressort et la pièce externe coulissante équivalente au fourreau.

Selon un premier mode de réalisation, la pièce externe coulissante se présente sous la forme de deux plaquettes de part et d'autre de l'extrémité plate et réunies par un ressaut mâle intérieur traversant la lumière devant le ressort, plaquettes dont au moins l'un des deux bords frontaux vient en appui contre le charnon femelle.

Par l'expression "devant le ressort", on entend bien évidemment le fait que le ressaut mâle de liaison des plaquettes entre elles passe entre le ressort et l'extrémité de la lumière proche de l'axe de liaison, par opposition au fond de la lumière en l'extrémité opposée où prend appui ce ressort. Les bords frontaux des plaquettes sont de préférence rectilignes en combinaison avec une périphérie d'oeilleton présentant au moins deux lignes à angle droit, voire un second angle d'extrémité. Ce mécanisme alors très efficace au point de vue de l'effet de claquement entre les positions de branche s'avère de surcroît particulièrement discret, les deux plaquettes étant alors assimilées d'un point de vue esthétique à des éléments de décoration que personne ne pense a priori être coulissants.

Selon une première variante de ce premier mode de réalisation, les deux plaquettes symétriques présentent chacune une creusure en leur face interne recevant un pont formant ressaut, ces trois pièces étant assemblées par une vis traversante ou par une double soudure ou brasure au niveau des creusures.

Selon une seconde variante, l'une des plaquettes présente en sa face interne une proéminence formant ressaut venant s'installer contre une proéminence ou dans une creusure réalisée en correspondance en la face interne de l'autre plaquette, ces deux pièces étant assemblées par encliquetage, ou par une vis ou une goupille traversante ou alors par une soudure ou brasure au niveau de la creusure.

Selon une troisième variante, les plaquettes et le pont-ressaut sont usinés d'un seul tenant, et on ménage un passage entre la lumière et le bord de l'extrémité plate de branche pour installation de cette pièce coulissante devant le ressort préalablement installé dans la lumière.

L'une comme l'autre des variantes est relativement facile à réaliser et à assembler, ce qui réduit d'autant les coûts de fabrication.

Selon un second mode de réalisation, la pièce externe coulissante présente une section transversale en U ou en O dont le passage interne correspond à la forme externe de l'extrémité plate.

La pièce coulissante peut alors être assimilée d'un point de vue esthétique à une bague de décoration entourant l'extrémité de branche plate, bague mince ou épaisse dont la forme de l'enveloppe externe peut, si désiré, élégamment prolonger celle donnée au charnon femelle.

Selon une première variante de ce second mode de réalisation, la pièce coulissante et la lumière sont traversées devant le ressort par une goupille-butée formant un ressaut mâle. Cette goupille-butée peut présenter une partie cylindrique tenue par serrage dans les orifices de la pièce externe, et une partie conique d'introduction reliée à la partie cylindrique par un pont de rupture. Les pièces de ce mécanisme sont simples à réaliser et sont assemblées d'une manière classique.

Selon une seconde variante, le passage interne de la pièce coulissante présente, au niveau de la lumière, une cavité correspondant au contour du ressort se terminant devant ce ressort par un ressaut femelle. Au prix d'un perçage borgne réalisé dans le passage interne, on supprime le besoin d'une goupille et on peut utiliser un ressort plus gros. Cette pièce coulissante est alors d'abord enfilée sur l'extrémité plate, puis poussée en comprimant le ressort afin de permettre l'assemblage de la charnière par installation de l'axe de liaison.

Avantageusement, le ressort est en partie contenu dans une douille-canon au sein de la lumière, cette douille présentant un coefficient de friction faible avec le matériau du ressort pour éviter tout risque de flambage lors de sa compression, et assurer une détente sans accroc. Notamment, cette douille retient la pièce externe en U contre une échappée latérale à la place du ressort, ce qui évite de le coincer.

L'invention sera mieux comprise à l'étude de modes de réalisation pris à titre nullement limitatif et illustrés dans les figures annexées dans lesquelles :
- les figures 1a et 1b sont des vues en perspective d'un premier mode de réalisation d'une charnière selon l'invention, respectivement assemblée et en pièces séparées,
- les figures 1c et 1d sont des vues en perspective d'une variante du premier mode de réalisation de la figure 1, respectivement en pièces séparées et partiellement assemblée,
- les figures 2a, 2b et 2c sont des vues en perspective d'un second mode de réalisation d'une charnière selon l'invention, respectivement assemblée, en coupe partielle et en pièces séparées,
- les figures 3a et 3b sont des vues en perspective d'un troisième mode de réalisation d'une charnière selon l'invention, respectivement assemblée et en coupe partielle, et
- les figures 4a et 4b sont des vues en perspective d'un quatrième mode de réalisation d'une charnière selon l'invention, respectivement assemblée et démontée.

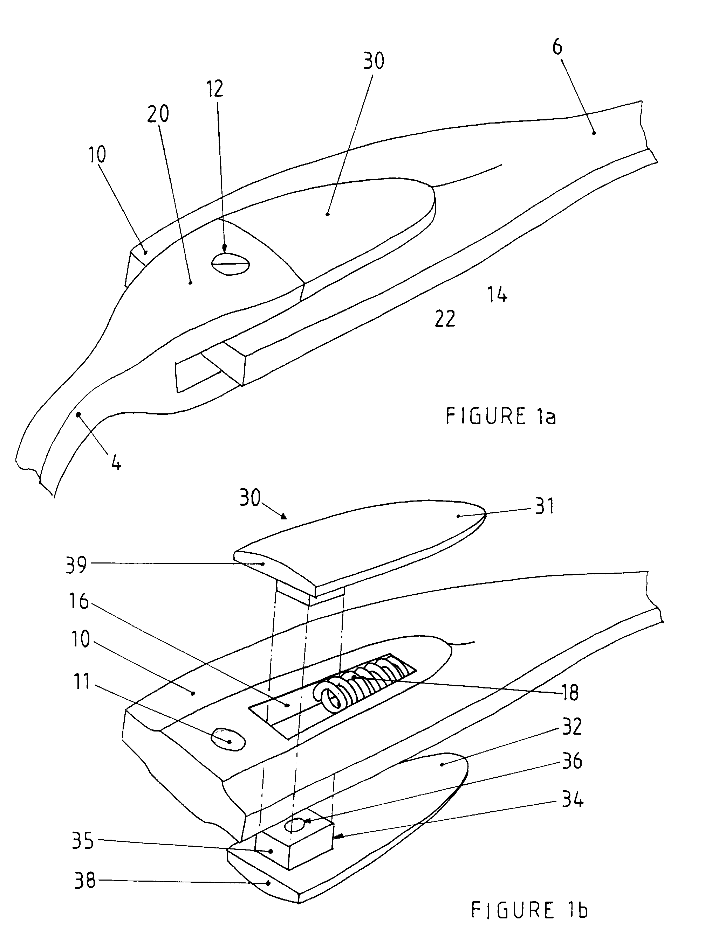

Sur la figure 1a est illustrée une charnière reliant un premier côté 4, par exemple un tenon de façade de monture de lunettes, à un second côté 6, par exemple une branche de monture de lunettes, étant bien entendu que les deux côtés peuvent être intervertis, le premier côté 4 devenant alors la branche et le second côté 6 étant le tenon de façade. Cette charnière comprend un charnon mâle 10 engagé entre les oeilletons supérieurs et inférieurs d'un charnon femelle 20 auquel il est relié par un axe de liaison 12.

Plus particulièrement dans le cadre de l'invention, l'extrémité 14 du second côté 6 portant le charnon mâle 10 présente une forme aplatie, notamment orientée à l'horizontale, c'est-à-dire que sa largeur est sensiblement plus grande que la hauteur formant l'épaisseur de ce charnon mâle. Un mécanisme élastique de rappel de la charnière est alors formé d'une part par la périphérie en came 22 des oeilletons du charnon femelle 20 présentant au moins deux angles droit et gauche réunis par un bord rectiligne contre lequel est poussée d'autre part une pièce externe 30 coulissant sur la grande face de cette extrémité 14.

A ce titre, et comme on peut mieux l'observer sur la figure 1b illustrant le mécanisme de rappel en éclaté, une lumière 16 rectangulaire longiligne traversante est percée dans l'épaisseur de l'extrémité 14 peu derrière l'orifice 11 de passage de l'axe 12 de liaison de la charnière et ceci dans le sens de la longueur du second côté 6. Dans cette lumière 16 est logé un moyen élastique de rappel, notamment un ressort hélicoïdal circulaire 18, ce moyen pouvant également être un ressort à section carrée, voire un bloc d'élastomère. Ce ressort 18 prend appui contre le fond arrière 8 de cette lumière, c'est-à-dire l'extrémité opposée à l'orifice 11 de passage d'axe de liaison.

Comme illustré, la pièce externe 30 est composée d'une plaquette supérieure 31 et d'une contre-plaquette 32 réunies entre elles par un pont-ressaut 35 traversant la lumière 16 devant le ressort 18. Les faces internes des plaquettes 31 et 32 sont prévues pour au moins couvrir la lumière 16 de telle sorte à enfermer et maintenir en place le ressort 18 dans cette lumière. Les dimensions et les formes des contours externes des plaquettes 31,32 sont par contre laissées au libre choix du concepteur de l'esthétique de la charnière. Notamment, ces contours externes peuvent présenter des stries, bourrelets ou autres gravures de décoration. Par contre, au moins l'un des bords frontaux 38,39 et de préférence ces deux bords frontaux, des plaquettes respectivement 32 et 31 sont rectilignes en correspondance avec la face de came de charnon femelle 22.

Le pont 35 de liaison des plaquettes 31,32 peut être une pièce indépendante ou, comme illustré, ménagé pour moitié dans la face interne de chacune des plaquettes, ou n'appartenir qu'à l'une des plaquettes, l'autre présentant en correspondance un évidement de mise en place. Un orifice 36 traversant les plaquettes et le pont 35 permet d'assembler solidement la pièce externe 30. On peut également envisager que les faces de jonction en vis-à-vis des demi-ponts 35 soient munies d'une liaison par tenon protubérant de l'une des faces s'encliquetant dans une rainure de l'autre face.

Surtout, la face arrière 34 de ce pont 35 forme un ressaut mâle, c'est-à-dire constitue un redan ou saillie ou décrochement protubérant des faces internes planes de plaquette, ressaut contre lequel vient pousser le ressort 18 appuyant ainsi la pièce externe 30 contre le charnon femelle 20.

Comme on peut aisément le comprendre, si l'on imprime une rotation de l'un 6 des côtés par rapport à l'autre 4 autour de l'axe de liaison 12, l'un des angles bordant la face de came 22 force un recul de la pièce externe 30 impliquant une compression du ressort 18. Une fois cet effort sur les côtés supprimés, la compression du ressort 18 agissant sur la pièce externe 30 force la charnière à se mettre en une position dans laquelle une face frontale 38,39 se retrouve à plat soit contre la face rectiligne 22 de charnon femelle ou l'une des deux faces rectilignes adjacentes à angle droit.

Dans ce premier mode de réalisation, on peut également envisager que les deux plaquettes et le pont-ressaut soient usinés d'un seul tenant. Selon une première variante, il convient alors de prévoir un passage transversal au milieu du logement jusqu'au bord latéral de l'extrémité plate pour installation de cette pièce externe coulissante, le ressort étant préalablement comprimé dans la moitié arrière du logement, par exemple au moyen d'un fil.

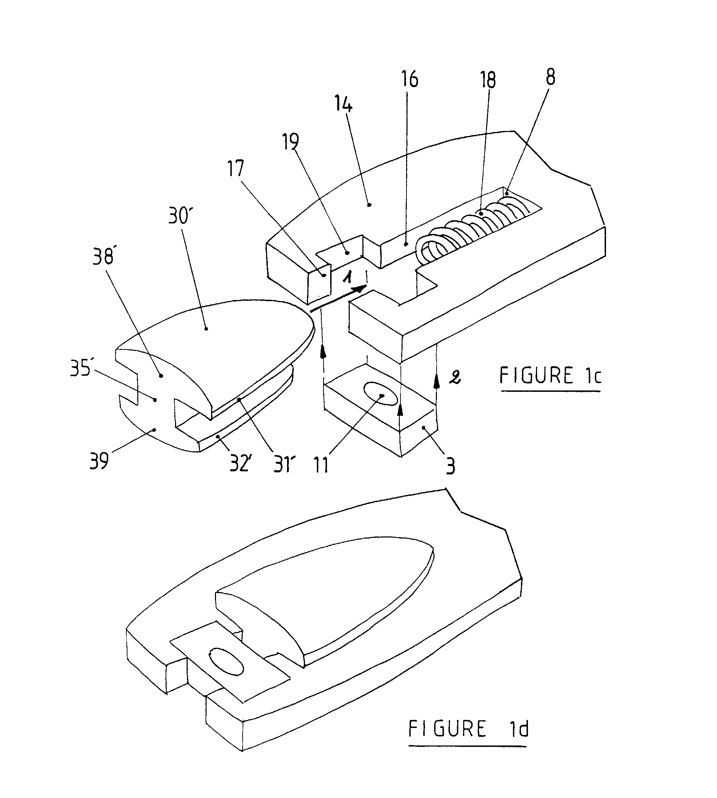

Selon une seconde variante, le mécanisme de rappel est basé sur une pièce coulissante monobloc 30' illustrée sur les figures 1c et 1d. Cette pièce 30' peut être réalisée en fraisant deux rainures dans les faces latérales d'un bloc métallique dégageant et séparant les deux plaquettes supérieure 31' et inférieure 32', l'intervalle laissé entre les rainures formant le pont 35'.

La lumière 16 est alors prolongée jusqu'au bord frontal de l'extrémité plate 14 de branche par un passage 17. De plus, une ouverture 19 est ménagée transversalement à ce passage 17, peu après la limite frontale de la lumière 16. Cette ouverture 19 est ici illustrée rectangulaire, mais pourrait avoir d'autres formes dès lors qu'elle est plus large que le passage 17. Cette ouverture 19 est prévue pour recevoir un bloc 3 de dimensions externes correspondant à celles internes de cette ouverture, bloc dans lequel est ménagé l'orifice de passage 11 de l'axe de liaison de charnière.

Comme bien visible des figures 1c et 1d, l'assemblage consiste alors à installer le ressort 18 dans la lumière 16, puis à insérer dans le passage 17 le pont 35' de la pièce 30' que l'on coulisse ensuite dans la lumière 16 en comprimant le ressort 18 jusqu'à dégager l'ouverture 19. On peut alors insérer le bloc 3 qui verrouille la pièce coulissante 30'. Ce bloc 3 est finalement verrouillé en position par les deux oeilletons du charnon femelle 20 assemblé au charnon mâle au moyen de l'axe de liaison de charnière.

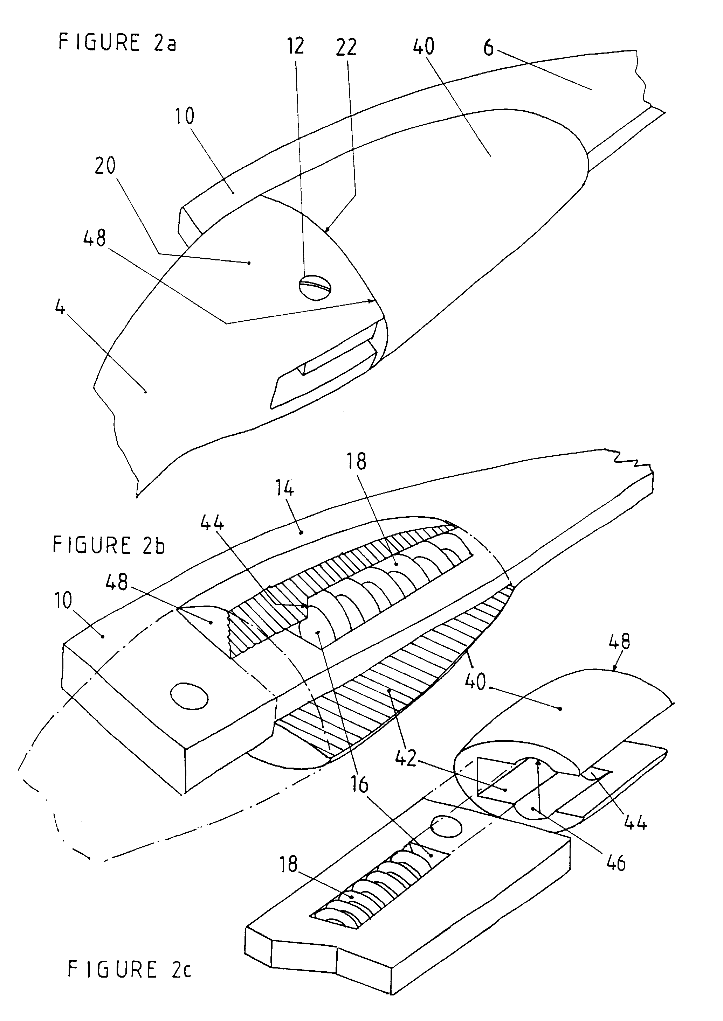

Les figures 2 illustrent un second mode de réalisation de la charnière selon l'invention dans lequel des références numériques identiques désignent des parties similaires. Cette variante se distingue notamment dans la géométrie de la pièce externe coulissante 40 qui présente ici une forme transversale en U entourant partiellement l'extrémité plate 14 du côté 6.

Comme mieux visible sur la figure 2c, cette pièce externe 40 présente donc un passage interne 42 sensiblement parallélépipédique dont la hauteur correspond à l'épaisseur de l'extrémité 14. De plus, ce passage interne 42 comprend une cavité cylindrique 46 borgne, c'est-à-dire se terminant par deux ressauts femelles 44. Ceci permet d'installer dans la lumière 16 un ressort 18' de diamètre sensiblement supérieur à l'épaisseur de l'extrémité plate 14.

La face frontale 48 de cette pièce 40 est également plane en correspondance avec la partie rectiligne 22 de la périphérie en came des oeilletons de la charnière femelle 20.

La forme et les dimensions de l'enveloppe externe de cette pièce 40 sont laissées au libre choix du concepteur de l'esthétique de cette charnière. Notamment, cette forme externe de pièce 40 peut élégamment prolonger la forme externe du charnon femelle 20 comme mieux visible sur la figure 2a.

En examinant la figure 2b, on comprend que l'assemblage de ce second mode de réalisation de charnière consiste à installer le ressort 18' dans son logement 16, puis à enfiler la pièce 40 par l'avant jusqu'à amener son ressaut femelle interne 44 en butée contre l'extrémité avant du ressort, dont l'extrémité arrière prend alors appui contre le fond du logement. Après avoir inséré le charnon mâle 10 dans le charnon femelle 20, on peut pousser les côtés 4 et 6 l'un vers l'autre, le charnon femelle 20 repoussant alors la pièce externe 40, jusqu'à ce que les orifices 11 des charnons soient en vis-à-vis, ce qui permet d'installer alors la vis de liaison 12. La face frontale 48 de la pièce 40 est alors en appui à plat contre la face plane correspondante du charnon femelle 20 dont les deux angles de bordure forment deux cames. On notera que les parties longitudinales du gros ressort 18 protubérant hors du logement 16 pour venir se loger dans la cavité 46 de la pièce 40 retiennent alors celle-ci en position par-dessus l'extrémité plate 14, c'est-à-dire qu'elles empêchent cette pièce de se dégager par le côté de cette extrémité plate.

Comme précédemment, une action de rotation des côtés 4 et 6 autour de leur axe de liaison 12 fait que l'un des deux angles-cames de ce charnon repousse la pièce 40 en comprimant son ressort interne 18. Dès que cette contrainte est supprimée, le ressort 18 force la pièce externe coulissante 40 à se stabiliser contre l'un des bords rectilignes du charnon femelle 20.

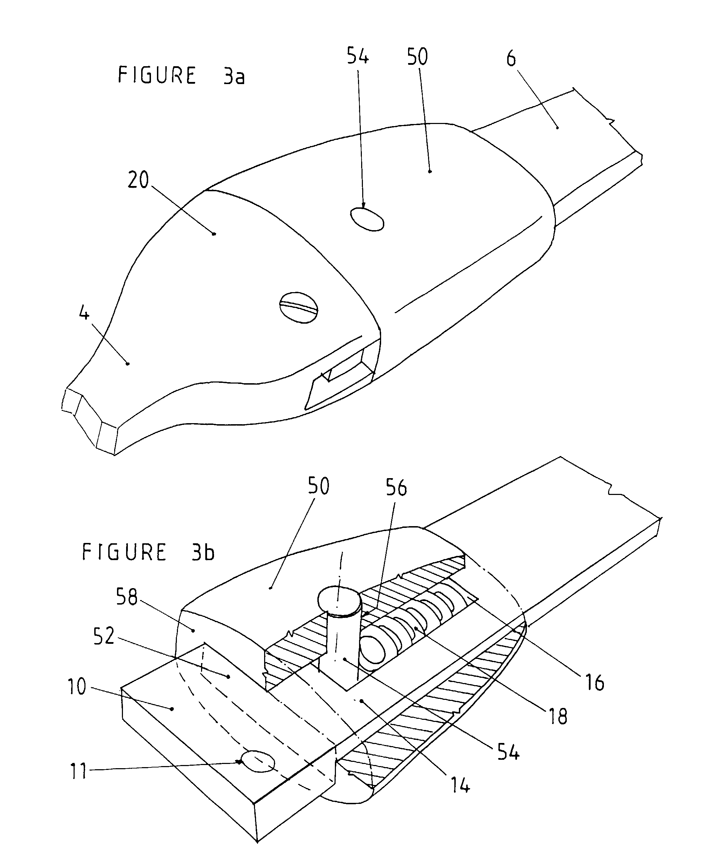

Les figures 3 illustrent un troisième mode de réalisation d'une charnière selon l'invention dans lequel la pièce externe coulissante 50 enveloppe complètement l'extrémité plate 14 du côté 6, c'est-à-dire que cette pièce se présente sous la forme d'une bague de section transversale sensiblement en O. Le passage interne 52 de cette bague est parallélépipédique avec ses dimensions correspondant à celles externes de l'extrémité plate 14 du côté 6. Le ressort 18 est alors entièrement contenu dans le logement 16 et on prévoit un orifice traversant 56 dans la bague 50 pour une goupille 54 passant devant le ressort 18, cette goupille formant ainsi un ressaut mâle recevant la poussée du ressort. Les dimensions et la forme de l'enveloppe externe de cette bague 50 sont au libre choix du concepteur de l'esthétique de la charnière et peuvent, comme illustré sur la figure 3, avantageusement prolonger celle du charnon femelle 20, ces deux pièces étant séparées par un plan comprenant la face frontale d'appui 58 de la pièce 50.

Pour l'assemblage, on commence par installer le ressort 18 dans son logement, puis on enfile la pièce externe 50 par-dessus l'extrémité 14 du côté 6 jusqu'à positionner l'orifice 56 de bague devant le ressort. On utilise alors, par exemple, une tige biseautée insérée dans cet orifice pour chasser le ressort en arrière, ce qui permet de passer ensuite la goupille-ressaut 54. Le diamètre de cette goupille est légèrement supérieur à celui de l'orifice de la pièce, de telle sorte à être maintenue en place par serrage.

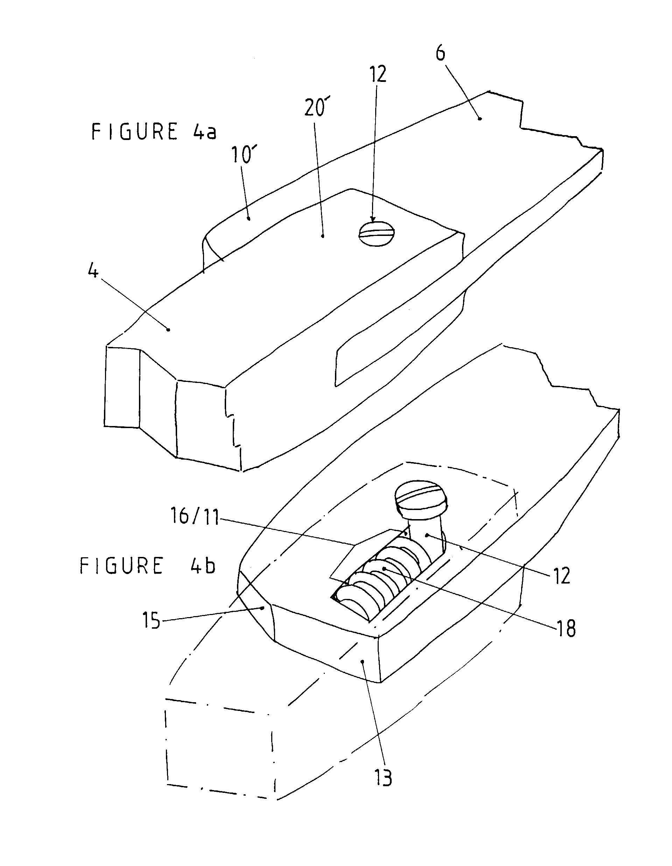

Les figures 4 illustrent un quatrième mode de réalisation d'une charnière selon l'invention dans lequel le logement 16 ménagé en l'extrémité plate n'est plus orienté vers le côté 6, mais est agencé en partant de l'orifice 11 de passage de l'axe de liaison 12 de la charnière vers la périphérie frontale maintenant en forme de came du charnon mâle 10'. Cette périphérie de charnon mâle présente au moins deux faces planes 13 et 15 séparées par un angle formant entre eux la came. Par rapport aux charnières classiques, ce charnon mâle 10' est donc un peu plus long, et il est de même pour les oeilletons du charnon femelle 20' correspondant.

Comme mieux visible sur la figure 4b, ce sont maintenant les oeilletons du charnon femelle 20' qui ferment la lumière 16 contenant ainsi le ressort 18 en place. Ce ressort 18 prend donc appui sur l'axe de liaison 12 pour pousser les faces frontales 13 et 15 du charnon mâle en appui au fond de cette charnière femelle 20' c'est-à-dire contre la face interne reliant les deux oeilletons entre eux. Cette face interne peut alors être biseautée pour présenter deux faces en correspondance avec les deux plans frontaux 13 et 15. Ces plans sont agencés de telle sorte qu'une rotation des côtés 4 et 6 autour de la charnière 12 implique un retrait du charnon mâle 10' hors du charnon femelle 20' par compression du ressort 18, ce ressort ramenant la charnière dans une position stable dans l'alignement ou à angle droit une fois l'effort supprimé.

L'invention n'est nullement strictement limitée aux modes de réalisation décrits mais englobe de nombreuses améliorations pouvant être apportées à ces charnières dans le cadre des revendications.

Par exemple, si les bords frontaux 38,39 des plaquettes sont, dans les exemples illustrés, rectilignes en correspondance avec les portions rectilignes des périphéries angulaires d'oeilletons de charnon femelle, on peut également envisager que ces bords frontaux soient convexes en correspondance avec des portions concaves de périphéries d'oeilletons.

Par exemple, la partie arrière du ressort prenant appui contre le fond du logement (ou contre l'axe 18 dans le dernier cas) peut être contenue à l'intérieur d'une douille en matériau présentant un faible coefficient de flexion avec celui du ressort tel que du cuivre ou un téflon, cette douille évitant un flambage et/ou un coincement par friction des spires du ressort contre les parois latérales du logement.

L'invention n'est pas non plus strictement limitée à l'application d'une branche plate de lunettes orientée à l'horizontale, mais peut également être adaptée à une branche verticale. Les charnons mâle et femelle se retrouvent alors perpendiculaires à la branche, et il suffit alors d'épaissir les bords frontaux 38,48,58 des pièces externes coulissantes 30,40 et 50 pour qu'ils puissent venir en appui agir contre la périphérie en came du charnon femelle.

Les pièces constitutives étant des structures relativement simples, elles sont de préférence usinées en métal pour obtenir des charnières de très petites dimensions, donc fort esthétiques.

## Revendications

1. Charnière élastique de lunettes comprenant du premier côté (6), par exemple en l'extrémité de la branche, un charnon mâle (10) et du second côté (4), par exemple sur le tenon de façade, un charnon femelle (20) relié au charnon mâle par un axe de liaison (12) caractérisée en ce que
- lorsque la périphérie du charnon mâle (10') du premier côté (6) est en forme de came (13,15), l'orifice (11) de passage de l'axe de liaison (12) du charnon mâle (10') se présente sous la forme d'une lumière longitudinale (16) orientée vers la périphérie en forme de came (13,15), et en ce qu'un ressort (18) logé dans la lumière (16) agit entre le fond de cette lumière et l'axe de liaison (12) pour pousser la périphérie en forme de came du charnon mâle contre le fond du charnon femelle (20') ; ou en ce que
- lorsque la périphérie des oeilletons du charnon femelle (20) du second côté (4) est en forme de came, l'extrémité plate (14) du premier côté (6) présente, proche du charnon mâle (10), une lumière (16) longitudinale transversale, en ce qu'une pièce externe (30) comprenant un ressaut (34) intérieur coulisse contre les grandes faces de l'extrémité plate (14) du premier côté (6) en recouvrant de part et d'autre la lumière (16), et en ce qu'un ressort (18) logé dans la lumière agit entre le fond de la lumière et le ressaut (34) pour pousser la pièce coulissante (30) contre la périphérie en forme de came du charnon femelle (20).

2. Charnière élastique de lunettes selon la revendication 1, caractérisée en ce que la pièce externe (30) coulissante se présente sous la forme de deux plaquettes (31,32) de part et d'autre de l'extrémité plate (14) et réunies par un ressaut mâle intérieur (34,35) traversant la lumière devant le ressort, plaquettes dont au moins l'un des deux bords frontaux (38,39) vient en appui contre le charnon femelle.

3. Charnière élastique de lunettes selon la revendication 2, caractérisée en ce que les deux plaquettes symétriques présentent chacune une creusure en leurs faces internes recevant un pont formant ressaut, ces trois pièces étant assemblées par une vis traversante ou par une double soudure au niveau des creusures.

4. Charnière élastique de lunettes selon la revendication 2, caractérisée en ce que l'une des plaquettes présente en sa face interne une proéminence formant ressaut (35) venant s'installer contre une proéminence ou dans une creusure réalisée en correspondance en la face interne de l'autre plaquette, ces deux pièces étant assemblées par encliquetage ou par une vis ou une goupille traversante ou par une soudure au niveau de la creusure.

5. Charnière élastique de lunettes selon la revendication 2, caractérisée en ce que les plaquettes et le pont-ressaut sont usinés d'un seul tenant, et en ce que l'on ménage un passage entre la lumière et le bord de l'extrémité plate de branche pour installation de cette pièce externe coulissante devant le ressort préalablement installé dans la lumière.

6. Charnière élastique de lunettes selon la revendication 1, caractérisée en ce que la pièce externe coulissante présente une section transversale en U (40) ou en O (50) dont le passage interne (42,52) correspond à la forme externe de l'extrémité plate (14).

7. Charnière élastique de lunettes selon la revendication 6, caractérisée en ce que la pièce coulissante (50) et la lumière (16) sont traversées devant le ressort (18) par une goupille-butée (54) formant un ressaut mâle.

8. Charnière élastique de lunettes selon la revendication 6, caractérisée en ce que le passage interne (42) de la pièce coulissante (40) présente, au niveau de la lumière (16), une cavité (46) correspondant aux contours du ressort (18) se terminant devant ce ressort par un ressaut femelle (44).

9. Charnière élastique de lunettes selon l'une des revendications précédentes, caractérisée en ce que le ressort (18) est en partie contenu dans une douille au sein de la lumière (16), cette douille présentant un coefficient de friction simple avec le matériau du ressort.
